# EUROPEAN PATENT APPLICATION

(11) **EP 3 214 122 A1**
(43) Date of publication of application: **06.09.2017**
(21) Application number: 15863875.9
(22) Date of filing: 05.11.2015
(51) Int. Cl.: C08L 9/00, B60C 1/00, C08J 3/16, C08K 5/10, C08K 5/47, C08L 7/00, C08L 71/02

(54) **RUBBER COMPOSITION FOR TIRE OUTER LAYER, AND PNEUMATIC TIRE**

(30) Priority: 28.11.2014 JP 2014241896
(71) Applicant: Sumitomo Rubber Industries, Ltd., Kobe-shi, Hyogo 651-0072 (JP)
(72) Inventor: MIYAZAKI Tatsuya, Kobe-shi Hyogo 651-0072 (JP)
(74) Representative: Manitz Finsterwald Patentanwälte PartmbB
(86) International application number: PCT/JP2015/081142
(87) International publication number: WO 2016/084569

(57) **Abstract**

The invention aims to provide a rubber composition for outer layers of tires capable of reducing the generation of odors while maintaining or improving good elongation at break and processability, and a pneumatic tire using the same. Included is a rubber composition for outer layers of tires, including: a rubber component; a nonionic surfactant or polyethylene glycol; and a vulcanization accelerator represented by formula (1) below, the rubber component including a diene rubber in an amount of 70-100% by mass based on 100% by mass of the rubber component, the rubber composition including, per 100 parts by mass of the rubber component, 0.2-6.0 parts by mass of the nonionic surfactant or polyethylene glycol, 0.2-10 parts by mass of the vulcanization accelerator, and not more than 0.5 parts by mass of N-tert-butyl-2-benzothiazolylsulfenamide, 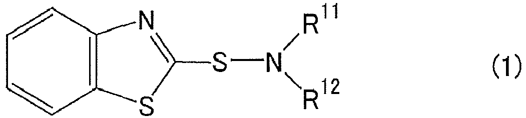 wherein R¹¹ represents a C2-C16 alkyl group, and R¹² represents a C3-C16 branched alkyl group or a benzothiazolylsulfide group.

## Description

### TECHNICAL FIELD

The present invention relates to a rubber composition for outer layers of tires and a pneumatic tire using the rubber composition.

### BACKGROUND ART

In recent years, users in the tire market, especially in China, highly concern about odors generated from spare tires, which presents a problem. In China in general, the tire stored in the trunk is not a temporary, emergency spare tire but the fifth normal tire. If this tire emits odors, the odors will accumulate in the trunk which is a closed space. As a result, such a problem occurs.

Some automobile manufacturers have odor standards using sensory testing performed after ground tires (equal to four normal tires) are stored in the trunk for several weeks. Thus, tires having no odor problem have been desired. However, tires have high tendencies to emit bad odors, e.g. because the quality of water used in the production of natural rubber is poor, or there are no compounding and material-controlling techniques to sufficiently prevent the generation of odors. Therefore, there is a need for improvement.

### SUMMARY OF INVENTION

### TECHNICAL PROBLEM

The present invention aims to solve the above problem and provide a rubber composition for outer layers of tires capable of reducing the generation of odors while maintaining or improving good elongation at break and processability, and a pneumatic tire using the rubber composition.

### SOLUTION TO PROBLEM

The present inventors have first focused attention on the fact that usual bead apexes containing hexamethylenetetramine (HMT) which, during a vulcanization reaction, decomposes to release ammonia or formaldehyde are located within a tire bead portion and make less contribution to generating odors; in contrast, particularly outer layer components which are exposed to the air, such as treads, wings, sidewalls, and clinches, among tire constituent components, greatly contribute to generating odors. Then, the inventors have found that the generation of odors can be sufficiently reduced while ensuring good elongation at break and processability, by the use of outer layer components prepared by incorporating predetermined amounts of a specific vulcanization accelerator and a nonionic surfactant or polyethylene glycol into a diene rubber, and simultaneously controlling the content of N-tert-butyl-2-benzothiazolylsulfenamide (TBBS) to a low level. Thus, the present invention has been arrived at.

The present invention relates to a rubber composition for outer layers of tires, containing:
a rubber component;
a nonionic surfactant or polyethylene glycol; and
a vulcanization accelerator represented by the formula (1) below,
the rubber component including a diene rubber in an amount of 70% to 100% by mass based on 100% by mass of the rubber component,
the rubber composition containing, per 100 parts by mass of the rubber component, 0.2 to 6.0 parts by mass of the nonionic surfactant or polyethylene glycol, 0.2 to 10 parts by mass of the vulcanization accelerator, and not more than 0.5 parts by mass of N-tert-butyl-2-benzothiazolylsulfenamide, 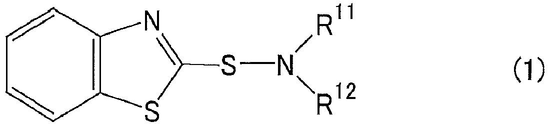 wherein R¹¹ represents a C2-C16 alkyl group, and R¹² represents a C3-C16 branched alkyl group or a benzothiazolylsulfide group.

The nonionic surfactant is preferably at least one selected from the group consisting of a Pluronic-type nonionic surfactant and at least one of nonionic surfactants represented by the following formulas (A) and (B) : 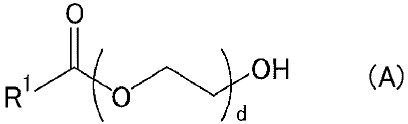 wherein R¹ represents a C6-C26 hydrocarbon group, and d represents an integer, 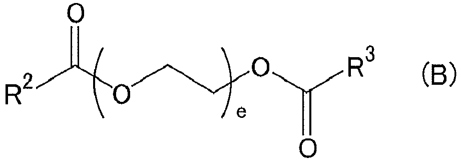 wherein R² and R³ are the same as or different from each other and each represent a C6-C26 hydrocarbon group, and e represents an integer.

The diene rubber preferably includes at least one of a synthetic polyisoprene rubber or a natural rubber produced by liquid phase coagulation of natural rubber latex.

The diene rubber preferably includes a highly purified natural rubber having a phosphorus content of 200 ppm or less.

The rubber composition for outer layers of tires is preferably a rubber composition for treads, sidewalls, wings, or clinches.

The present invention also relates to a pneumatic tire, formed from the rubber composition for outer layers of tires.

### ADVANTAGEOUS EFFECTS OF INVENTION

The rubber composition for outer layers of tires of the present invention contains a rubber component including a diene rubber, and predetermined amounts of a nonionic surfactant or polyethylene glycol and a specific vulcanization accelerator, and further has a content of N-tert-butyl-2-benzothiazolylsulfenamide equal to or less than a predetermined level. The rubber composition is therefore capable of reducing the generation of odors while maintaining or improving good elongation at break and processability.

### DESCRIPTION OF EMBODIMENTS

The rubber composition for outer layers of tires of the present invention contains a rubber component including a diene rubber, and predetermined amounts of a nonionic surfactant or polyethylene glycol (polyethylene oxide) and a vulcanization accelerator represented by the above formula (1). The content of N-tert-butyl-2-benzothiazolylsulfenamide in the rubber composition is adjusted to not more than a predetermined level.

In the present invention, a vulcanization accelerator of formula (1) is used to reduce odors from raw materials themselves and their decomposition products, and further the content of N-tert-butyl-2-benzothiazolylsulfenamide is reduced to prevent odors derived therefrom. Further, a nonionic surfactant or polyethylene glycol is incorporated to form a uniform bloom film which reduces the actual surface area of the rubber surface layer to suppress volatilization of odor components from the rubber, and also reduces absorption of oxygen from the air and reduces the generation of new odor components within the rubber. In addition, elongation at break and processability can be maintained or improved. Therefore, the generation of odors can be reduced while maintaining or improving these properties.

Particular when the nonionic surfactant or polyethylene glycol is a compound of formula (A) or (B) or a Pluronic-type nonionic surfactant, such effects are effectively achieved so that the generation of odors can be sufficiently reduced. These surfactants adsorb portions of antioxidants to suppress rapid volatilization of the antioxidants during vulcanization, and to reduce the loss of weight with time. Therefore, ozone cracking resistance can also be maintained for a long time.

In the present invention, the rubber component includes a predetermined amount of a diene rubber.

Examples of the diene rubber include isoprene-based rubbers, polybutadiene rubber (BR), styrene-butadiene rubber (SBR), styrene-isoprene-butadiene rubber (SIBR), chloroprene rubber (CR), and acrylonitrile butadiene rubber (NBR). The rubber component may include other rubber materials such as non-diene rubbers, including, for example, ethylene-propylene-diene rubber (EPDM), butyl rubber (IIR), and halogenated butyl rubbers (X-IIR). These rubber materials may be used alone or in combinations of two or more.

The amount of the diene rubber based on 100% by mass of the rubber component is 70% by mass or more, preferably 80% by mass or more, more preferably 90% by mass or more, and may be 100% by mass. The rubber composition containing the diene rubber in the range indicated above can suitably enjoy the effects of the present invention, good elongation at break, and good fuel economy, and can be suitably used as a rubber composition for tires.

As described above, the diene rubber in the present invention may include natural rubber (NR), which may cause odors. NR odors are due to the nitrogen or phosphorus compounds originally contained in natural rubber, as well as impurities and decomposed substances contained in soil for rubber trees, and new decomposed substances produced by bacteria during ambient temperature drying to hot air drying processes. Amine odors, on the other hand, are due to the products resulting from decomposition of N-tert-butyl-2-benzothiazolylsulfenamide (TBBS), N-cyclohexyl-2-benzothiazolylsulfenamide (CBS), N-(1,3-dimethylbutyl)-N'-phenyl-p-phenylenediamine (6PPD), or similar compounds. Among these amine odors, the amine odor derived from TBBS, even in trace amounts, is unpleasant to humans. In the present invention, since a nonionic surfactant and a specific vulcanization accelerator are incorporated while the content of N-tert-butyl-2-benzothiazolylsulfenamide is reduced to not more than a predetermined level, the generation of odors can be reduced.

The NR may be produced by any of various methods. In particular, the NR is preferably one produced by liquid phase coagulation of natural rubber latex. Some impurities causing odors can be removed by coagulation of latex with, for example, an acid.

The natural rubber latex used in the present invention is collected as sap of natural rubber trees such as hevea trees. It contains a rubber component and other components including water, proteins, lipids, and inorganic salts. The gel fraction in the rubber is considered to be derived from a complex of various impurities therein. In the present invention, the natural rubber latex may be, for example, a raw latex (field latex) taken from hevea trees by tapping, or a latex concentrated by centrifugation or creaming (e.g. purified latex, high-ammonia latex prepared by adding ammonia in a conventional manner, and LATZ latex stabilized with zinc oxide, TMTD, and ammonia).

The natural rubber latex may be coagulated, for example, by adding an acid such as formic acid, acetic acid, or sulfuric acid to adjust the pH.

The coagulated rubber produced as above is usually washed to remove the aqueous solution, proteins, and the like. The washing may be carried out by known methods of washing with water. After the washing treatment, the rubber is dried in a dryer. Thus, NR can be produced by the above coagulation process.

The NR may suitably be a highly purified natural rubber having a phosphorus content of 200 ppm or less. The highly purified natural rubber may be produced by methods that involve saponification and subsequent coagulation of natural rubber latex as disclosed in, for example, WO 2010/071106 and WO 2014/125700. Substances causing odors, such as impurities, raw materials, and bacteria, can be removed by saponification, coagulation, water washing, and other processes.

The diene rubber may also include a synthetic polyisoprene rubber (IR), which is an isoprene-based rubber. Since IR is catalytically synthesized from petroleum and does not contain impurities and decomposition-causing substances contained in natural rubber, it can reduce the generation of odors. In view of elongation at break and abrasion resistance, IR is usually used in combination with NR.

The amount of the isoprene-based rubber (e.g. NR, IR) based on 100% by mass of the rubber component is preferably 10% to 80% by mass. In this case, good crack growth resistance and good tensile strength can be obtained.

The rubber composition of the present invention may contain BR.

The BR is not particularly limited, and may be any of those commonly used in the tire industry, including, for example: high-cis BR such as BR1220 available from Zeon Corporation, and BR130B and BR150B both available from Ube Industries, Ltd.; BR containing 1,2-syndiotactic polybutadiene crystals (SPB) such as VCR412 and VCR617 both available from Ube Industries, Ltd.; and polybutadiene rubbers synthesized using rare earth catalysts (rare earth-catalyzed BR). The BR may be tin-modified polybutadiene rubber (tin-modified BR) which has been modified with a tin compound. In particular, the BR preferably has a cis content of 95% by mass or more. It is also preferred to use a combination of SPB-containing BR and tin-modified BR.

In a preferred embodiment of the SPB-containing BR, in view of abrasion resistance and extrusion processability, SPB crystals are not merely dispersed in BR but are chemically bonded to BR and dispersed therein. The SPB preferably has a melting point of 180°C to 220°C. The SPB content of the SPB-containing BR is preferably 2.5% to 20% by mass. The SPB content of the SPB-containing BR refers to the amount of boiling n-hexane insolubles.

Preferably, the tin-modified BR is produced by polymerization of 1,3-butadiene using a lithium initiator followed by addition of a tin compound, and further has a tin-carbon bond at a molecular end thereof.

Examples of the lithium initiator include lithium compounds such as alkyllithiums and aryllithiums. Examples of the tin compound include tin tetrachloride and butyltin trichloride. The tin-modified BR preferably has a tin atom content of 50 to 3,000 ppm. The tin-modified BR preferably has a molecular weight distribution (Mw/Mn) of 2 or less. Moreover, the tin-modified BR preferably has a vinyl content of 5% to 50% by mass.

The number average molecular weight (Mn) and the weight average molecular weight (Mw) herein are determined using a gel permeation chromatograph (GPC) calibrated with polystyrene standards. The vinyl content (the proportion of 1,2-butadiene units) can be measured by infrared absorption spectrometry.

The amount of BR based on 100% by mass of the rubber component is preferably 20% by mass or more, more preferably 30% by mass or more. The amount is preferably 80% by mass or less, more preferably 75% by mass or less. When the amount of BR falls within the range indicated above, good abrasion resistance, durability, and crack growth resistance can be obtained while ensuring good elongation at break.

For use in sidewalls or clinches, the combined amount of the isoprene-based rubber and BR, based on 100% by mass of the rubber component, is preferably 90% by mass or more, more preferably 95% by mass or more, and may be 100% by mass. In such cases, good elongation at break, abrasion resistance, durability, and crack growth resistance can be obtained. For use in treads, BR or SBR may be used as a main ingredient without NR.

In the present invention, a nonionic surfactant or polyethylene glycol is used.

The nonionic surfactant is not particularly limited. In particular, it may suitably be at least one selected from the group consisting of a Pluronic-type nonionic surfactant, and a nonionic surfactant represented by the formula (A) below and/or a nonionic surfactant represented by the formula (B) below. When a surfactant having a specific molecular structure or a specific molecular weight is used, an appropriate amount of the surfactant will migrate to the surface layer from the rubber to form a thin, uniform bloom layer with a thickness of several micrometers containing an antioxidant, wax, oil, and tackifying resin on the tire surface. The hydrophobic groups and hydrophilic groups of the surfactants are aligned on the rubber side and air side, respectively, so that surface roughness is reduced to decrease surface area. It is probably for this reason that volatile odor substances such as low-molecular-weight t-butylamine are dissolved in the bloom layer to reduce the amount of odor substances volatilizing into the air, and thus the generation of odors is reduced. The nonionic surfactant may be used alone or in combinations of two or more.

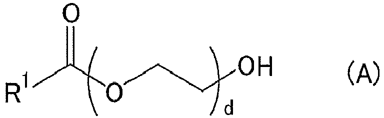

In the formula, R¹ represents a C6-C26 hydrocarbon group, and d represents an integer.

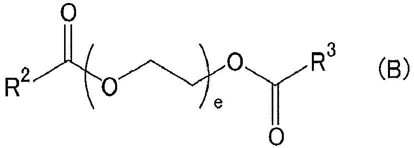

In the formula, R² and R³ are the same as or different from each other and each represent a C6-C26 hydrocarbon group, and e represents an integer.

First, the nonionic surfactant(s) represented by formula (A) and/or (B) will be described. Among these surfactants, the nonionic surfactant represented by formula (A) is preferred because the effects of the present invention can be more suitably achieved.

R¹ in formula (A) represents a C6-C26 hydrocarbon group. When R¹ is a hydrocarbon group having five or less carbon atoms, such a surfactant is less compatible with rubber and migrates too fast to the rubber surface, as a result of which the rubber surface tends to have poor appearance. Also, when R¹ is a hydrocarbon group having 27 or more carbon atoms, such a material is difficult to obtain or expensive and is thus unsuitable. When the number of carbon atoms of the hydrocarbon group for R¹ falls within the range indicated above, blooming of the nonionic surfactant can be suitably controlled and the effects of the present invention can be more suitably achieved.

R¹ is preferably a hydrocarbon group having 8 to 24 carbon atoms, more preferably 10 to 22 carbon atoms, still more preferably 14 to 20 carbon atoms.

Examples of the C6-C26 hydrocarbon group as R¹ include C6-C26 alkenyl groups, C6-C26 alkynyl groups, and C6-C26 alkyl groups.

Examples of C6-C26 alkenyl groups include 1-hexenyl, 2-hexenyl, 1-octenyl, decenyl, undecenyl, dodecenyl, tridecenyl, tetradecenyl, pentadecenyl, heptadecenyl, octadecenyl, icosenyl, tricosenyl, and hexacosenyl groups.

Examples of C6-C26 alkynyl groups include hexynyl, heptynyl, octynyl, nonynyl, decynyl, undecynyl, dodecynyl, tridecynyl, tetradecynyl, pentadecynyl, heptadecynyl, octadecynyl, icosynyl, tricosynyl, and hexacosynyl groups.

Examples of C6-C26 alkyl groups include hexyl, heptyl, 2-ethylhexyl, octyl, nonyl, decyl, undecyl, dodecyl, tridecyl, tetradecyl, pentadecyl, octadecyl, heptadecyl, octadecyl, icosyl, tricosyl, and hexacosyl groups.

R¹ is preferably a C6-C26 alkenyl group or a C6-C26 alkynyl group, more preferably a C6-C26 alkenyl group.

A surfactant with a greater d (integer) has a higher value of HLB, which represents hydrophile-lipophile balance, and tends to migrate faster to the rubber surface. In the present invention, the d value is not particularly limited, and may be chosen appropriately depending on the service conditions, purpose, or other factors. In particular, d is preferably 2 to 25, more preferably 4 to 20, still more preferably 8 to 16, particularly preferably 10 to 14.

Examples of the nonionic surfactant of formula (A) include ethylene glycol monooleate, ethylene glycol monopalmeate, ethylene glycol monopalmitate, ethylene glycol monovaccenate, ethylene glycol monolinoleate, ethylene glycol monolinolenate, ethylene glycol monoarachidonate, ethylene glycol monostearate, ethylene glycol monocetylate, and ethylene glycol monolaurate. These nonionic surfactants may be used alone or in combination of two or more. In view of ready availability or cost, ethylene glycol monooleate, ethylene glycol monolaurate, ethylene glycol monostearate, and ethylene glycol monopalmitate are preferred among these.

R² and R³ in formula (B) are the same as or different from each other and each represent a C6-C26 hydrocarbon group. When R² or R³ is a hydrocarbon group having five or less carbon atoms, such a surfactant is less compatible with rubber and migrates too fast to the rubber surface, as a result of which the rubber surface tends to have poor appearance. When R² or R³ is a hydrocarbon group having 27 or more carbon atoms, such a material is difficult to obtain or expensive and is thus unsuitable. When the number of carbon atoms of the hydrocarbon group for R² and R³ falls within the range indicated above, blooming of the nonionic surfactant can be suitably controlled and the effects of the present invention can be more suitably achieved.

R² or R³ is preferably a hydrocarbon group having 8 to 24 carbon atoms, more preferably 10 to 22 carbon atoms, still more preferably 14 to 20 carbon atoms.

Examples of the C6-C26 hydrocarbon group as R² or R³ include C6-C26 alkenyl groups, C6-C26 alkynyl groups, and C6-C26 alkyl groups.

Examples of C6-C26 alkenyl groups, C6-C26 alkynyl groups, or C6-C26 alkyl groups include the groups as mentioned for R¹.

R² or R³ is preferably a C6-C26 alkenyl group or a C6-C26 alkynyl group, more preferably a C6-C26 alkenyl group.

A surfactant with a greater e (integer) has a higher value of HLB, which represents hydrophile-lipophile balance, and tends to migrate faster to the rubber surface. In the present invention, the e value is not particularly limited, and may be chosen appropriately depending on the service conditions, purpose, or other factors. In particular, e is preferably 2 to 25, more preferably 4 to 20, still more preferably 8 to 16, particularly preferably 10 to 14.

Examples of the nonionic surfactant of formula (B) include ethylene glycol dioleate, ethylene glycol dipalmeate, ethylene glycol dipalmitate, ethylene glycol divaccenate, ethylene glycol dilinoleate, ethylene glycol dilinolenate, ethylene glycol diarachidonate, ethylene glycol distearate, ethylene glycol dicetylate, and ethylene glycol dilaurate. These nonionic surfactants may be used alone or in combinations of two or more. In view of ready availability or cost, ethylene glycol dioleate, ethylene glycol dilaurate, ethylene glycol distearate, and ethylene glycol dipalmitate are preferred among these.

Next, the Pluronic-type nonionic surfactant will be described.

Pluronic-type nonionic surfactants are also called polyoxyethylene polyoxypropylene glycols, polyoxyethylene polyoxypropylene block polymers, or polypropylene glycol ethylene oxide adducts, and are generally represented by the formula (I) below. As shown in formula (I), the Pluronic-type nonionic surfactants contain on both sides thereof a hydrophilic group having an ethylene oxide structure, and also contain a hydrophobic group having a propylene oxide structure between the hydrophilic groups.

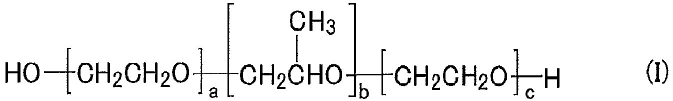

In formula (I), a, b, and c represent integers.

The degree of polymerization of the polypropylene oxide block (b in formula (I)) and the number of polyethylene oxide units added ((a + c) in formula (I)) in the Pluronic-type nonionic surfactant are not particularly limited, and may be chosen appropriately according to the service conditions, purpose, or other factors. A surfactant with a higher proportion of the polypropylene oxide block has higher affinity for rubber and tends to migrate to the rubber surface at a slower rate. In particular, in order to suitably control blooming of the nonionic surfactant and more suitably achieve the effects of the present invention, the degree of polymerization of the polypropylene oxide block (b in formula (I)) is preferably 100 or less, more preferably 10 to 70, still more preferably 10 to 60, particularly preferably 20 to 60, most preferably 20 to 45. For the same reason, the number of polyethylene oxide units added ((a + c) in formula (I)) is preferably 100 or less, more preferably 3 to 65, still more preferably 5 to 55, particularly preferably 5 to 40, most preferably 10 to 40. When the degree of polymerization of the polypropylene oxide block and the number of polyethylene oxide units added are within the respective ranges indicated above, blooming of the nonionic surfactant can be suitably controlled and the effects of the present invention can be more suitably achieved.

Examples of the Pluronic-type nonionic surfactant include Pluronic series available from BASF Japan Ltd., Newpol PE series available from Sanyo Chemical Industries, Ltd., Adeka Pluronic L or F series available from Adeka Corporation, Epan series available from DKS Co. Ltd., and Pronon series or UNILUB available from NOF corporation. These Pluronic-type nonionic surfactants may be used alone or in combinations of two or more.

The nonionic surfactant may also be, for example, a polyoxyethylene sorbitan fatty acid ester, polyoxyethylene alkyl ether, or (poly)ethylene glycol dialkyl ether.

The fatty acid of the polyoxyethylene sorbitan fatty acid ester preferably has 6 to 22 carbon atoms, more preferably 12 to 20 carbon atoms. The average number of moles of ethylene oxide added is preferably 5 to 40 moles, more preferably 5 to 20 moles.

Specific examples of the polyoxyethylene sorbitan fatty acid ester include polyoxyethylene sorbitan monococoate, polyoxyethylene sorbitan monolaurate, polyoxyethylene sorbitan monopalmitate, polyoxyethylene sorbitan monostearate, polyoxyethylene sorbitan monoisostearate, polyoxyethylene sorbitan tristearate, polyoxyethylene sorbitan monooleate, and polyoxyethylene sorbitan trioleate. Preferred among these is polyoxyethylene sorbitan monostearate or polyoxyethylene sorbitan trioleate.

The alkyl group of the polyoxyethylene alkyl ether preferably has 6 to 22 carbon atoms, more preferably 8 to 16 carbon atoms. The alkyl group may be linear, branched, or cyclic. The average number of moles of ethylene oxide added is preferably 5 to 40 moles, more preferably 5 to 20 moles.

Specific examples of the polyoxyethylene alkyl ether include polyoxyethylene dodecyl ether, polyoxyethylene cetyl ether, polyoxyethylene octyl ether, polyoxyethylene lauryl ether, polyoxyethylene cetyl ether, and polyoxyethylene stearyl ether. Preferred among these is polyoxyethylene dodecyl ether.

The alkyl groups of the (poly)ethylene glycol dialkyl ether each preferably have 2 to 18 carbon atoms, more preferably 3 to 10 carbon atoms. The alkyl groups may be linear, branched, or cyclic. The two alkyl groups may be the same as or different from each other. The average number of moles of ethylene oxide added is preferably 1 to 40 moles, more preferably 1 to 10 moles.

Specific examples of the (poly)ethylene glycol dialkyl ether include monoethylene glycol dialkyl ethers whose alkyl groups each have 1 to 4 carbon atoms, such as ethylene glycol dimethyl ether, ethylene glycol diethyl ether, ethylene glycol diisopropyl ether, and ethylene glycol dibutyl ether; and diethylene glycol dialkyl ethers whose alkyl groups each have 1 to 4 carbon atoms, such as diethylene glycol dimethyl ether, diethylene glycol diethyl ether, diethylene glycol diisopropyl ether, and diethylene glycol dibutyl ether. Preferred among these is ethylene glycol dibutyl ether.

The polyethylene glycol (PEG) is not particularly limited, and may suitably be, for example, a compound represented by the following formula:

HO(CH₂CH₂O)ₚH

wherein p represents a repeating unit.

The number average molecular weight Mn of the polyethylene glycol is preferably 1,000 to 10,000, more preferably 2,000 to 5,000. When the Mn falls within the range indicated above, the effects of the present invention can be well achieved.

The amount of the nonionic surfactant or polyethylene glycol per 100 parts by mass of the rubber component is 0.2 parts by mass or more, preferably 0.5 parts by mass or more, more preferably 0.7 parts by mass or more, still more preferably 1.0 part by mass or more. If the amount is less than 0.2 parts by mass, the effects of the present invention cannot be sufficiently achieved. Also, the amount is 6.0 parts by mass or less, preferably 4.0 parts by mass or less, more preferably 3.0 parts by mass or less, still more preferably 2.0 parts by mass or less. If the amount is more than 6.0 parts by mass, elongation at break deteriorates, and scorch time decreases (or processability deteriorates).

In the present invention, a compound represented by the following formula (1) is used as a specific vulcanization accelerator.

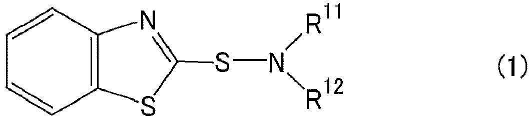

In the formula, R¹¹ represents a C2-C16 alkyl group, and R¹² represents a C3-C16 branched alkyl group or a benzothiazolylsulfide group.

The alkyl group as R¹¹ preferably has a branched structure. The branched alkyl group is preferably as described for the C3-C16 branched alkyl group as R¹², which will be described later.

The alkyl group as R¹¹ preferably has 4 to 16 carbon atoms, more preferably 4 to 12 carbon atoms. When the carbon number is 1, adsorption tends to occur, while when the carbon number is 17 or more, hardness tends to decrease.

Preferred examples of the alkyl group as R¹¹ include an ethyl group, a t-butyl group, a 2-ethylhexyl group, a 2-methylhexyl group, a 3-ethylhexyl group, a 3-methylhexyl group, a 2-ethylpropyl group, a 2-ethylbutyl group, a 2-ethylpentyl group, a 2-ethylheptyl group, and a 2-ethyloctyl group.

The C3-C16 branched alkyl group as R¹² is preferably a linear alkyl group represented by -(CH₂)ₖ-CH₃ (k is an integer of 1 to 14) in which at least one hydrogen atom in the carbon chain (CH₂)ₖ is replaced with an alkyl group to have a branched structure (i.e. a linear and branched alkyl group).

The branched alkyl group as R¹² preferably has 4 to 16 carbon atoms, more preferably 6 to 12 carbon atoms. When the carbon number is 2 or less, adsorption tends to occur, while when the carbon number is 17 or more, hardness tends to decrease.

Preferred examples of the alkyl group as R¹² include a t-butyl group, a 2-ethylhexyl group, a 2-methylhexyl group, a 3-ethylhexyl group, a 3-methylhexyl group, a 2-ethylpropyl group, a 2-ethylbutyl group, a 2-ethylpentyl group, a 2-ethylheptyl group, and a 2-ethyloctyl group.

The benzothiazolylsulfide group as R¹² is represented by the following formula.

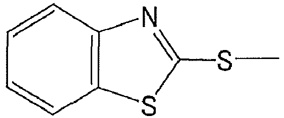

R¹² is preferably a benzothiazolylsulfide group. For excellent hardness, R¹² is preferably a benzothiazolylsulfide group when R¹¹ is a t-butyl group.

Examples of the compound of formula (1) include BEHZ (N,N-di(2-ethylhexyl)-2-benzothiazolylsulfenamide) available from Kawaguchi Chemical Industry Co., Ltd., BMHZ (N,N-di(2-methylhexyl)-2-benzothiazolylsulfenamide) available from Kawaguchi Chemical Industry Co., Ltd., Santocure TBSI (N-tert-butyl-2-benzothiazolylsulfenimide) available from Flexsys, and ETZ (N-ethyl-N-t-butylbenzothiazole-2-sulfenamide) available from Ouchi Shinko Chemical Industrial Co., Ltd.

The amount of the vulcanization accelerator of formula (1) per 100 parts by mass of the rubber component is 0.2 parts by mass or more, preferably 0.5 parts by mass or more, more preferably 0.7 parts by mass or more. If the amount is less than 0.2 parts by mass, a desired crosslink density tends not to be obtained and properties such as elongation at break tend to deteriorate. The amount is 10 parts by mass or less, preferably 6.0 parts by mass or less, more preferably 5.0 parts by mass or less, still more preferably 4.5 parts by mass or less. If the amount is more than 10 parts by mass, elongation at break deteriorates.

In the present invention, the amount of N-tert-butyl-2-benzothiazolylsulfenamide is not more than 0.5 parts by mass per 100 parts by mass of the rubber component. When the amount of this compound is small, the generation of bad odors due to t-butylamine and similar compounds after vulcanization can be prevented. The amount is preferably not more than 0.4 parts by mass, more preferably not more than 0.3 parts by mass, still more preferably not more than 0.2 parts by mass. Preferably, no N-tert-butyl-2-benzothiazolylsulfenamide is present.

The amount of N,N-dicyclohexyl-2-benzothiazolylsulfenamide is desirably small because it is persistent and is classified into Class I designated chemical substances. For example, the amount is preferably not more than 0.5 parts by mass, more preferably not more than 0.1 parts by mass per 100 parts by mass of the rubber component. Particularly preferably, no N,N-dicyclohexyl-2-benzothiazolylsulfenamide is present.

In the present invention, either carbon black or silica may be used alone, or both may be used in combination.

The rubber composition of the present invention preferably contains carbon black. This can provide a reinforcing effect and an UV-blocking effect and therefore the effects of the present invention can be well achieved. Examples of usable carbon black include GPF, FEF, HAF, ISAF, and SAF.

The carbon black preferably has a nitrogen adsorption specific surface area (N₂SA) of 20 to 200 m²/g, more preferably 30 to 120 m²/g. When the N₂SA is less than 20 m²/g, durability or handling stability may decrease. When the N₂SA is more than 200 m²/g, sufficient fuel economy or processability may not be obtained. Herein, the nitrogen adsorption specific surface area of carbon black can be determined in conformity with JIS K 6217-2:2001.

In the case of the rubber composition containing carbon black, the amount of carbon black per 100 parts by mass of the rubber component is preferably 2 to 60 parts by mass, more preferably 20 to 55 parts by mass, still more preferably 24 to 50 parts by mass. When the amount is less than 2 parts by mass, sufficient UV cracking resistance or reinforcing properties tend not to be obtained, and durability, elongation at break, handling stability, ozone resistance, or discoloration resistance tends to deteriorate. When the amount is more than 60 parts by mass, fuel economy may deteriorate.

The rubber composition of the present invention may contain silica. Any silica may be used, and examples include dry silica (anhydrous silica) and wet silica (hydrous silica). Preferred is wet silica (hydrous silica) because it has a large number of silanol groups.

In the case of the rubber composition containing silica, the amount of silica may be chosen appropriately in view of the effects of the present invention and from other standpoints. For example, for use in sidewalls or clinches, the amount of silica is preferably 0.1 to 40 parts by mass per 100 parts by mass of the rubber component. When the amount is more than 40 parts by mass, fuel economy and processability may deteriorate.

When the rubber composition contains silica, it preferably contains a silane coupling agent together with the silica. However, when the amount of carbon black is 15 parts by mass or more and the amount of silica is 12 parts by mass or less, it is unnecessary to use a silane coupling agent because in this case the silica is immobilized in the carbon gel and thus less likely to reaggregate.

The silane coupling agent may be any silane coupling agent conventionally used in combination with silica in the rubber industry. Examples include sulfide silane coupling agents such as bis(3-triethoxysilylpropyl)disulfide; mercapto silane coupling agents such as 3-mercaptopropyltrimethoxysilane; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxy-silane; and chloro silane coupling agents such as 3-chloropropyltrimethoxysilane.

The rubber composition of the present invention may contain a softener. When a softener is incorporated, blooming of the nonionic surfactant and other components can be suitably controlled and the effects of the present invention can be better achieved.

Examples of the softener include oil, C5 petroleum resins, C9 petroleum resins, coumarone indene resin, indene resin, non-reactive alkylphenol resins, and resins such as aromatic vinyl polymers obtained by polymerization of α-methylstyrene and/or styrene. Among these, oil is preferred because the effects of the present invention can be suitably achieved.

Examples of the oil include process oils such as paraffinic process oils, aromatic process oils (e.g. treated distillate aromatic extracts (TDAE)), and naphthenic process oils, and vegetable oils and fats such as castor oil and cottonseed oil, and mixtures thereof. Among these, aromatic process oils such as TDAE or naphthenic oils are preferred because they provide better tensile strength or elongation.

The amount of the softener per 100 parts by mass of the rubber component is preferably 1.0 part by mass or more, more preferably 3.0 parts by mass or more. Also, the amount is preferably 30 parts by mass or less, more preferably 14 parts by mass or less, still more preferably 12 parts by mass or less. When the amount falls within the range indicated above, blooming of the nonionic surfactant, antioxidant, wax, and other components can be suitably controlled, and weather resistance and the effects of the present invention can be more suitably achieved.

The rubber composition of the present invention may appropriately contain, in addition to the above components, other compounding agents commonly used in the production of rubber compositions, such as stearic acid, zinc oxide, or a vulcanizing agent.

In the present invention, sulfur is preferably used as a vulcanizing agent. This can lead to moderate crosslinking between polymers, with the result that blooming of the nonionic surfactant and other components can be suitably controlled and the effects of the present invention can be more suitably achieved. Examples of the sulfur include those commonly used in the rubber industry, such as powdered sulfur, precipitated sulfur, colloidal sulfur, insoluble sulfur, highly dispersible sulfur, and soluble sulfur. These sulfur materials may be used alone or in combinations of two or more.

The amount of sulfur per 100 parts by mass of the rubber component is preferably 0.1 parts by mass or more, more preferably 0.5 parts by mass or more, still more preferably 1.0 part by mass or more. When the amount is less than 0.1 parts by mass, sufficient vulcanizate hardness (Hs) or co-curing with neighboring rubber compounds may not be obtained. The amount is preferably 6.0 parts by mass or less, more preferably 4.0 parts by mass or less, still more preferably 3.0 parts by mass or less. When the amount is more than 6.0 parts by mass, crack growth resistance, ozone resistance, elongation at break, or durability may deteriorate.

Besides sulfur, an alkylphenol-sulfur chloride condensate (e.g. Tackirol V200 available from Taoka Chemical Co., Ltd.) may be used as a vulcanizing agent in the present invention.

The rubber composition of the present invention may be prepared by known methods, such as, for example, by kneading the aforementioned components using a rubber kneading machine such as an open roll mill or a Banbury mixer, and then vulcanizing the kneadate.

The rubber composition of the present invention can be used in any tire component and may be suitably used as a rubber composition for outer layers of tires each of which forms a surface (outer surface) of a tire, such as a tread, wing, sidewall, or clinch, and more suitably a sidewall, clinch apex, or wing, among others.

A wing refers to a component positioned between a tread and a sidewall in the shoulder area. Specifically, it is a component as shown in, for example, Figs.1 and 3 of JP 2007-176267 A.

A clinch refers to a rubber part located at a lower portion of a sidewall and covering the area contacting a rim, and is also called a clinch apex or a rubber chafer. Specifically, it is a component as shown in, for example, Fig. 1 of JP 2008-75066 A.

The pneumatic tire of the present invention can be formed from the rubber composition by usual methods. Specifically, the rubber composition, before vulcanization, may be extruded and processed into the shape of a tire component such as a tread, wing, sidewall, or clinch, and then assembled with other tire components in a conventional manner on a tire building machine to build an unvulcanized tire. The unvulcanized tire may be heated and pressurized in a vulcanizer to produce a tire.

### EXAMPLES

The present invention will be specifically described with reference to, but not limited to, examples.

The chemicals used in production examples are described below.
Natural rubber latex: Field latex available from Thaitex
Surfactant: Emal-E available from Kao Corporation
NaOH: NaOH available from Wako Pure Chemical Industries, Ltd.

### (Production Example 1: Production of modified natural rubber 1)

The natural rubber latex was adjusted to have a solids concentration (DRC) of 30% (w/v). Then, 10 g of the surfactant Emal-E and 20 g of NaOH were added to 1,000 g of the natural rubber latex, followed by a saponification reaction for 48 hours at room temperature to prepare a saponified natural rubber latex. This latex was diluted with water to adjust the DRC to 15% (w/v), and then formic acid was added to the dilution with slow stirring to adjust the pH to 4.0 to 4.5, whereby the latex was coagulated. The coagulated rubber was crushed and washed with 1,000 ml of water six times, followed by drying at 110°C for two hours to obtain modified natural rubber 1 (solid rubber).

### (Production Example 2: Production of modified natural rubber 2)

Modified natural rubber 2 was prepared as in Production Example 1, except that the amount of NaOH was changed to 30 g and the saponification reaction time was changed to 96 hours.

### (Production Example 3: Production of modified natural rubber 3)

Modified natural rubber 3 was prepared as in Production Example 1, except that the amount of NaOH was changed to 15 g, the saponification reaction time was changed to 24 hours, and the number of cycles of washing with 1,000 mL of water was changed to twice.

### (Production Example 4: Production of modified natural rubber 4)

Modified natural rubber 4 was prepared as in Production Example 1, except that the amount of NaOH was changed to 10 g, the saponification reaction time was changed to one hour, and the number of cycles of washing with 1,000 mL of water was changed to once.

The chemicals used in the examples and comparative examples are listed below.
NR 1: TSR20
NR 2: RSS3
Modified NR 1: Production Example 1 (Phosphorus: 105 ppm)
Modified NR 2: Production Example 2 (Phosphorus: 20 ppm)
Modified NR 3: Production Example 3 (Phosphorus: 220 ppm)
Modified NR 4: Production Example 4 (Phosphorus: 390 ppm)
IR: IR2200
BR 1: BR1250H (tin-modified BR polymerized using a lithium initiator, tin atom content: 250 ppm, Mn/Mw: 1.39, vinyl content: 10.0% by mass) available from Zeon Corporation
BR 2: VCR617 (SPB-containing BR, SPB content: 17% by mass, melting point of SPB: 200°C) available from Ube Industries, Ltd.
BR 3: BR730 (rare earth-catalyzed BR synthesized using a Nd catalyst, cis content: 97% by mass) available from JSR Corporation
EPDM: Esprene EPDM 301A available from Sumitomo Chemical Co., Ltd.
Carbon black 1 (N550): Shoblack N550 (N₂SA: 42 m²/g, DBP oil absorption: 115 mL/100 g) available from Cabot Japan K.K.
Carbon black 2 (N220): Shoblack N220 (N₂SA: 111 m²/g, DBP oil absorption: 115 mL/100 g) available from Cabot Japan K.K.
Silica: Ultrasil VN3 available from Evonik Degussa
Oil: Vivatec 500 (TDAE, low polycyclic aroma oil) available from H&R
Petroleum C5 resin: Marukarez T-100AS (softening point: 102°C) available from Maruzen Petrochemical Co., Ltd.
Wax: Oxoace 355 available from Nippon Seiro Co., Ltd.
Surfactant 1: NEWPOL PE-64 (Pluronic-type nonionic surfactant, copolymer of PEG/PPG (25/30), formula (I) in which (a + c) is 25 and b is 30) available from Sanyo Chemical Industries, Ltd.
Surfactant 2: NEWPOL PE-74 (Pluronic-type nonionic surfactant, copolymer of PEG/PPG (30/35), formula (I) in which (a + c) is 30 and b is 35) available from Sanyo Chemical Industries, Ltd.
Surfactant 3: Ionet DO600 (principal ingredient: a compound represented by the formula below which corresponds to formula (B) in which R² and R³ are each -C₁₇H₃₃ and e is 12) available from Sanyo Chemical Industries, Ltd. **C₁₇H₃₃COO(CH₂CH₂O)₁₂COC₁₇H₃₃**
Surfactant 4: Ionet PO600 (principal ingredient: a compound represented by the formula below which corresponds to formula (A) in which R¹ is -C₁₇H₃₃ and d is 12) available from Sanyo Chemical Industries, Ltd. **C₁₇H₃₃COO(CH₂CH₂O)₁₂H**
Surfactant 5: Polyoxyethylene sorbitan monostearate available from Kanto Chemical Co., Inc.
Surfactant 6: Polyoxyethylene sorbitan trioleate available from Kanto Chemical Co., Inc.
Surfactant 7: Polyoxyethylene dodecyl ether available from Kanto Chemical Co., Inc.
Surfactant 8: Ethylene glycol dibutyl ether available from Tokyo Chemical Industry Co., Ltd.
Surfactant 9: PEG-4000N (PEG, Mn: 3100) available from Sanyo Chemical Industries, Ltd.
Antioxidant 6C: Antigene 6C (N-(1,3-dimethylbutyl)-N'-phenyl-p-phenylenediamine (6PPD)) available from Sumitomo Chemical Co., Ltd.
Antioxidant TMQ: Nocrac 224 (2,2,4-trimethyl-1,2-dihydroquinoline polymer) available from Ouchi Shinko Chemical Industrial Co., Ltd.
Stearic acid: Stearic acid "Tsubaki" available from NOF Corporation
Zinc oxide: Ginrei R available from Toho Zinc Co., Ltd.
Sulfur: SEIMI sulfur OT (insoluble sulfur, oil content: 10%) available from Nippon Kanryu Industry Co., Ltd.
Vulcanization accelerator TBBS: Nocceler NS (N-tert-butyl-2-benzothiazolylsulfenamide) available from Ouchi Shinko Chemical Industrial Co., Ltd.
Vulcanization accelerator CBS: Nocceler CZ (N-cyclohexyl-2-benzothiazolylsulfenamide) available from Ouchi Shinko Chemical Industrial Co., Ltd.
Vulcanization accelerator DM: Nocceler DM (di-2-benzothiazolyldisulfide) available from Ouchi Shinko Chemical Industrial Co., Ltd.
Vulcanization accelerator TBSI: Santocure TBSI (N-tert-butyl-2-benzothiazolylsulfenimide) available from Flexsys
Vulcanization accelerator BEHZ: BEHZ (N,N-di(2-ethylhexyl)-2-benzothiazolylsulfenamide) available from Kawaguchi Chemical Industry Co., Ltd.
V200: Tackirol V200 (alkylphenol-sulfur chloride condensate) available from Taoka Chemical Co., Ltd.

### (Examples and Comparative Examples)

The chemicals in the formulation amounts shown in Table 1 to 3, except the sulfur and vulcanization accelerators, were kneaded in a 1.7 L Banbury mixer (Kobe Steel, Ltd.) for four minutes before discharge at 160°C. Then, the sulfur and vulcanization accelerator(s) were added to the kneaded mixture and they were kneaded using an open roll mill for three minutes before discharge at 105°C to prepare an unvulcanized rubber composition. The unvulcanized rubber composition was formed into the shape of a sidewall and assembled with other tire components to build an unvulcanized tire. The unvulcanized tire was vulcanized at 175°C for 10 minutes to prepare a test tire (195/65R15, summer tire). The hardness Hs of the sidewall was adjusted to 54 ± 2.

The properties of the test tires thus prepared were evaluated in the following tests.

### <Sensory evaluation of odors>

After the vulcanization, the tires were allowed to stand at ambient temperature for four weeks to form a bloom layer. Then, one tire was wrapped in a bag that was excellent in air permeation, and the opening was completely sealed by heat. The wrapped tire was allowed to stand at room temperature for two weeks, and then the odors in the bag were sensorily evaluated based on the following criteria. The target score is 3 or higher.
1: Bad odors
2: Unpleasant odors
3: Acceptable level of odors
4: No problem
5: No odors
6: Aromatic odors

### <Resistance to scorch during extrusion>

The extruded sidewall was comprehensively evaluated for flatness of the extrudate texture and the degree of smoothness of the edges, which were visually evaluated, and for scorch time t10. If scorch occurs during extrusion, the following problems will occur, such as that: cured bits are formed in the extrudate, resulting in partial swelling of the extrudate or rough edges; the sidewalls cannot have a predetermined thickness distribution; bareness due to poor rubber flow is caused after vulcanization; or a uniformity defect occurs.

The results were evaluated on a 6-point scale in which 6 was the best. A higher score indicates better extrusion processability. The target score is 3 or higher. The score 3+ means a rating that is lower than 4 but slightly higher than 3.

### <Elongation at break>

Rubber samples were cut out of the sidewalls of the tires. Next, specimens were prepared from the rubber samples using a No. 3 dumbbell die and then subjected to a tensile test at room temperature in conformity with JIS K 6251 "Rubber, vulcanized or thermoplastics - Determination of tensile stress-strain properties" to measure the elongation at break EB (%). The target EB is 380% or higher.

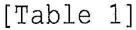

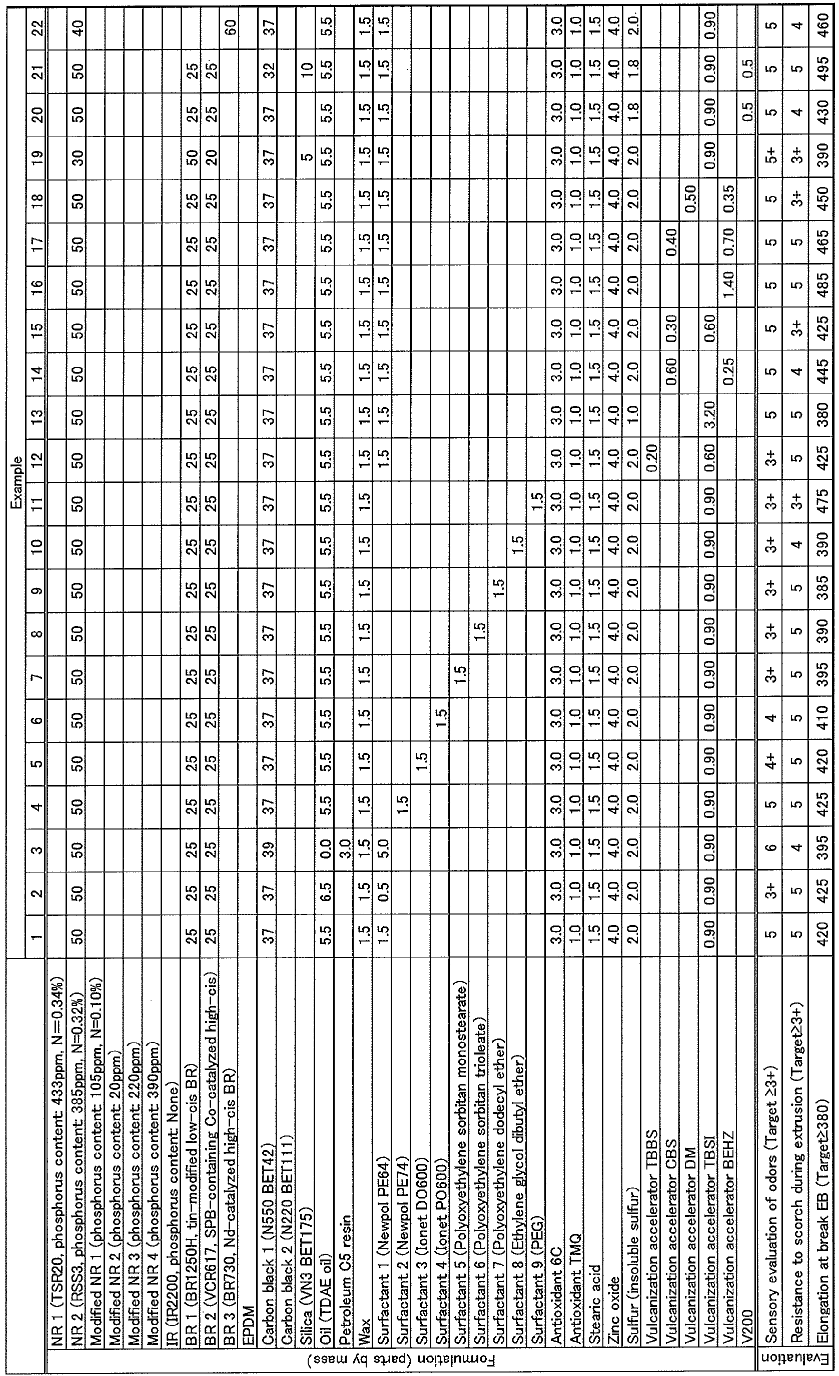

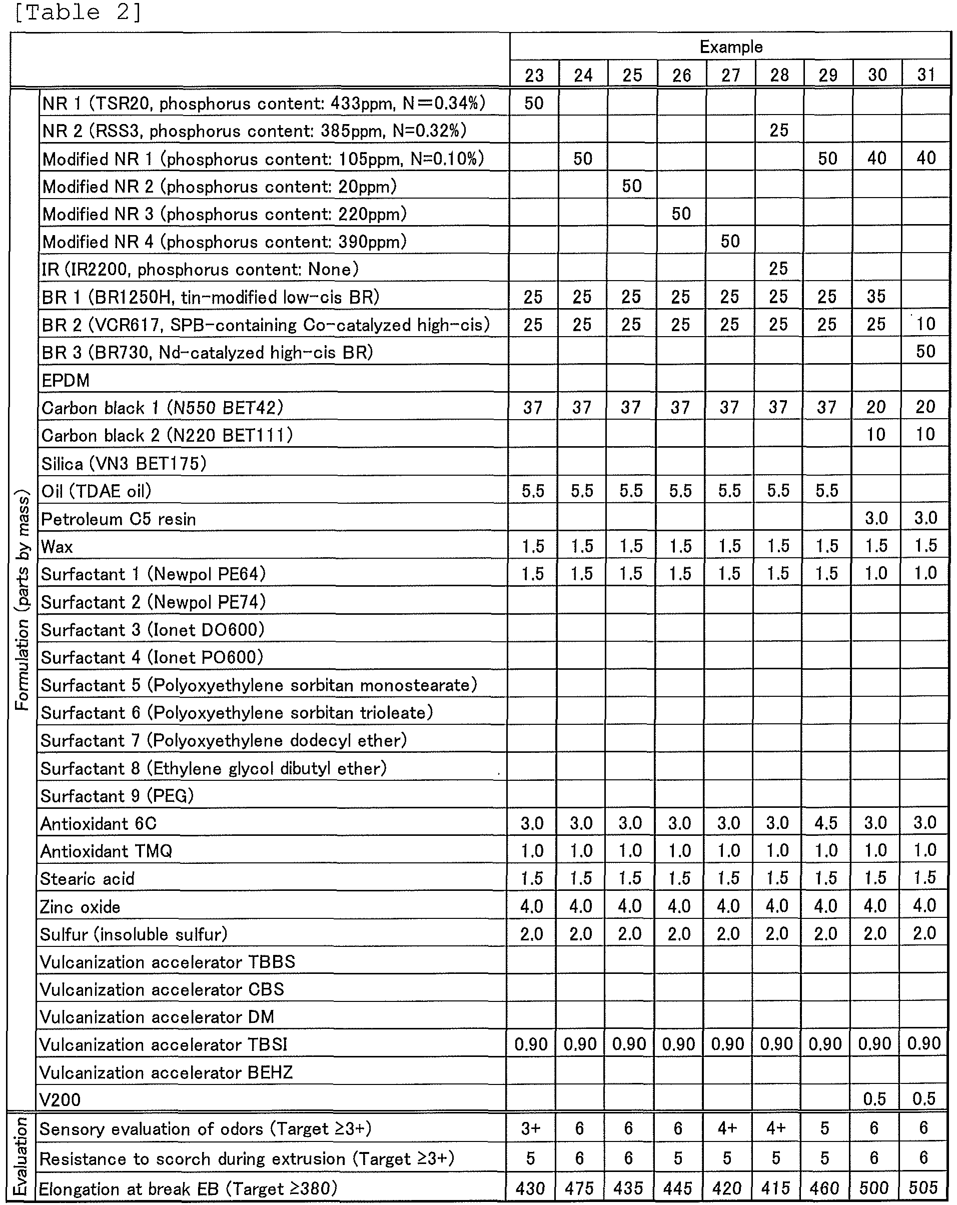

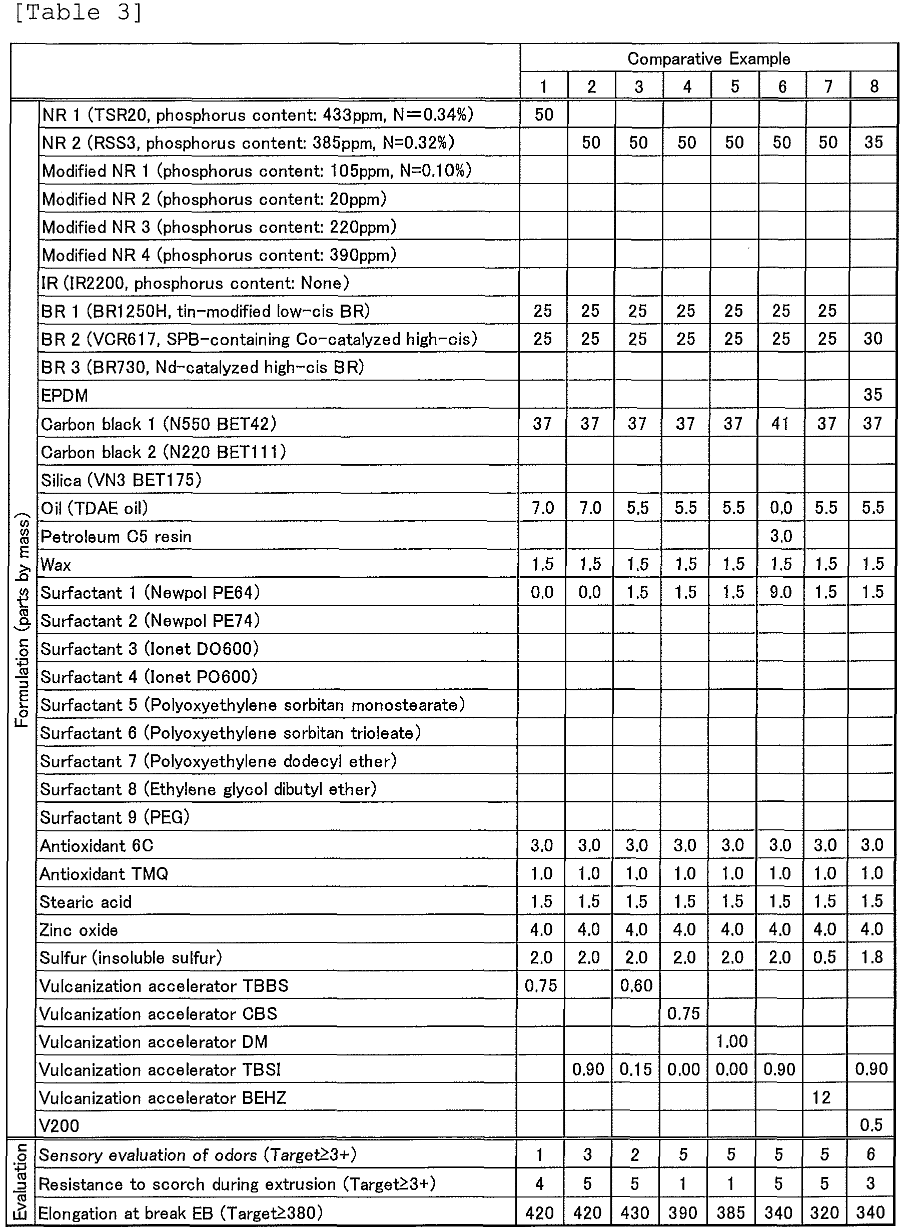

The generation of odors was reduced while maintaining or improving good elongation at break and resistance to scorch during extrusion (processability) in the examples in which the rubber composition contained a rubber component including a diene rubber, and predetermined amounts of a nonionic surfactant or polyethylene glycol and a vulcanization accelerator of formula (1), and the content of N-tert-butyl-2-benzothiazolylsulfenamide in the rubber composition was adjusted to not more than a predetermined level.

Specifically, the results of Examples 1, 2, and 3 and Comparative Example 2 demonstrated that by incorporating a nonionic surfactant, odor properties can be improved while maintaining or improving elongation at break and resistance to scorch during extrusion. The results of Examples 1 and 12 and Comparative Examples 1 and 3 demonstrated that good odor properties can be obtained by adjusting the amount of TBBS to not more than 0.5 parts by mass.

Also, the results of Examples 14, 16, 17, and 18 and Examples 20 and 21 demonstrated that the use of CBS, DM, or BEHZ in an amount sufficient for sidewall applications does not cause an odor problem, and BEHZ or TBSI, which provide longer scorch time, can be combined with CBS, DM, or V200, which provide shorter scorch time, to control scorch properties to an acceptable level.

The results of Examples 23 to 28 show that RSS provided better ability to reduce odors than TSR, and highly purified NR provided better ability to reduce odors than RSS. It is also shown that highly purified NR had higher resistance to scorch during extrusion than TSR or RSS.

## Claims

1. A rubber composition for outer layers of tires, comprising:
a rubber component;
a nonionic surfactant or polyethylene glycol; and
a vulcanization accelerator represented by the formula (1) below,
the rubber component comprising a diene rubber in an amount of 70% to 100% by mass based on 100% by mass of the rubber component,
the rubber composition comprising, per 100 parts by mass of the rubber component, 0.2 to 6.0 parts by mass of the nonionic surfactant or polyethylene glycol, 0.2 to 10 parts by mass of the vulcanization accelerator, and not more than 0.5 parts by mass of N-tert-butyl-2-benzothiazolylsulfenamide, 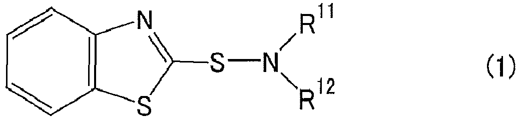 wherein R¹¹ represents a C2-C16 alkyl group, and R¹² represents a C3-C16 branched alkyl group or a benzothiazolylsulfide group.

2. The rubber composition for outer layers of tires according to claim 1,
wherein the nonionic surfactant is at least one selected from the group consisting of a Pluronic-type nonionic surfactant and at least one of nonionic surfactants represented by the following formulas (A) and (B) : 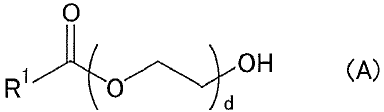 wherein R¹ represents a C6-C26 hydrocarbon group, and d represents an integer, 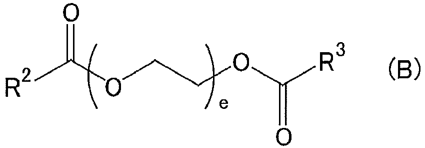 wherein R² and R³ are the same as or different from each other and each represent a C6-C26 hydrocarbon group, and e represents an integer.

3. The rubber composition for outer layers of tires according to claim 1 or 2,
wherein the diene rubber comprises at least one of a synthetic polyisoprene rubber or a natural rubber produced by liquid phase coagulation of natural rubber latex.

4. The rubber composition for outer layers of tires according to any one of claims 1 to 3,
wherein the diene rubber comprises a highly purified natural rubber having a phosphorus content of 200 ppm or less.

5. The rubber composition for outer layers of tires according to any one of claims 1 to 4,
which is a rubber composition for treads, sidewalls, wings, or clinches.

6. A pneumatic tire, formed from the rubber composition for outer layers of tires according to any one of claims 1 to 5.
